# EUROPÄISCHE PATENTSCHRIFT

(11) **EP 2 872 324 B1**
(45) Veröffentlichungstag und Bekanntmachung des Hinweises auf die Patenterteilung: **27.04.2016**
(21) Anmeldenummer: 13731091.8
(22) Anmeldetag: 18.06.2013
(51) Int. Cl.: B32B 15/08, B32B 15/14, B32B 27/20, B32B 27/40, C08J 5/04, C08J 5/12

(54) **SANDWICHBLECH UND VERFAHREN ZU DESSEN HERSTELLUNG**
SANDWICH SHEET METAL AND METHOD FOR THE PRODUCTION THEREOF
TÔLE SANDWICH ET SON PROCÉDÉ DE FABRICATION

(30) Priorität: 10.07.2012 DE 102012106206
(43) Veröffentlichungstag der Anmeldung: 20.05.2015
(73) Patentinhaber: ThyssenKrupp Steel Europe AG, 47166 Duisburg (DE)
(72) Erfinder: BÖGER, Thorsten, 47906 Kempen (DE); KLAUKE, Peter, 58239 Schwerte (DE); LEWE, Tobias, 48145 Münster (DE)
(74) Vertreter: Ossmann, Jens
(86) Internationale Anmeldenummer: PCT/EP2013/062635
(87) Internationale Veröffentlichungsnummer: WO 2014/009114

(56) Entgegenhaltungen:
- EP-A2- 1 118 451
- EP-A2- 1 362 770
- WO-A1-01/12434
- WO-A1-2009/106500
- WO-A1-2011/100734
- WO-A1-2012/126923
- DE-A1-102011 015 071

## Beschreibung

Die Erfindung betrifft ein Sandwichblech, insbesondere zur Herstellung von Bauelementen oder Karosserieteilen, mit metallischen Deckblechen und mindestens einer zwischen den Deckblechen angeordneten Kernschicht aus Polymer, die stoffschlüssig mit den Deckblechen verbunden ist. Insbesondere betrifft die Erfindung ein Verfahren zur Herstellung eines Sandwichblechs, insbesondere zur Verwendung im Bauwesen oder Karosseriebau, bei dem metallische Deckbleche mit einer dazwischen angeordneten Kernschicht aus Polymer unter Anwendung von Druck und Wärme stoffschlüssig verbunden werden.

Derartiges Sandwichmaterial ist bekannt.

Unter der Bezeichnung "LITECOR" ist ein seitens der Anmelderin entwickeltes Sandwichblech bekannt, das aus zwei Deckblechen aus Stahl und einer Kernschicht aus Kunststoff aufgebaut ist. Dieses Sandwichblech zeichnet sich durch ein relativ geringes Gewicht bei guter Biegesteifigkeit für Anwendungen unter anderem im Karosseriebau aus. Die Kernschicht dieses Materials besteht aus einem thermoplastischen Co-Polymer.

Der vorliegenden Erfindung lag die Aufgabe zugrunde, ein Sandwichblech der vorstehend genannten Art dahingehend weiter zu entwickeln, dass es eine kostengünstige und mit höheren Steifigkeitseigenschaften versehene Kernschicht aufweist, ohne dass seine Anwendungsmöglichkeiten eingeschränkt werden, und welches insbesondere kalt formbar ist. Vielmehr soll das Anwendungspotenzial eines solchen Sandwichblechs erweitert werden.

Zur Lösung dieser Aufgabe wird ein Sandwichblech mit den Merkmalen des Anspruchs 1 bzw. ein Herstellungsverfahren mit den Merkmalen des Anspruchs 9 vorgeschlagen.

Die Kernschicht des erfindungsgemäßen Sandwichblechs weist einen faserhaltigen Träger und eine die Fasern des Trägers umgebende Polyurethan-Matrix auf, wobei letztere aus einer wässrigen, lösungsmittelfreien Polyurethan-Dispersion gebildet ist, wobei die Fasern als kürzere Faserstücke mit einer Länge von maximal 50 mm in der Polyurethan-Matrix vorliegen.

Durch den faserhaltigen Träger wird eine Basis geschaffen, die in Verbindung mit der die Fasern umgebenden Polyurethan-Matrix eine kostengünstige und leichte Kernschicht für das Sandwichblech darstellt. Durch die von der Polyurethan-Matrix umgebenen bzw. vorimprägnierten kurzen Faserstücke lässt sich das Sandwichblech besonders gut kalt umformen.

Als Fasern für die Kernschicht des erfindungsgemäßen Sandwichblechs können verschiedene kostengünstige Faserarten verwendet werden. Mittels der Fasern lassen sich die Eigenschaften des Sandwichblechs beeinflussen und somit dessen Anwendungsmöglichkeiten erweitern.

Nach einer vorteilhaften Ausgestaltung des erfindungsgemäßen Sandwichblechs sind die Fasern der Kernschicht aus mineralischen Fasern, vorzugsweise aus keramischen Fasern zusammengesetzt. Hierdurch lässt sich ein leichtes, hitzebeständiges Sandwichblech mit guter bis sehr guter Biegesteifigkeit erzielen.

Eine weitere vorteilhafte Ausgestaltung der Erfindung ist dadurch gekennzeichnet, dass die Polyurethan-Dispersion geblocktes Isocyanat enthält bzw. der wässrigen, lösemittelfreien Polyurethan-Dispersion zur Herstellung der Kernschicht geblocktes Isocyanat zugegeben wird. Hitzebeständige Fasern, wie Keramikfasern und Glasfasern, können spröde sein und lassen nur eine geringe Umformung zu. Um insbesondere die Elastizität und die Verbundhaftung des faserhaltigen mit wässriger, lösemittelfreier PU-Dispersion getränkten Trägers zur Verwendung als Kernschicht des erfindungsgemäßen Sandwichblechs zu erhöhen, wird der PU-Dispersion geblocktes NCO (Isocyanat) zugegeben. Geblockt bedeutet, dass der NCO-Anteil in der PU-Dispersion bei Raumtemperatur (ca. 20°C) isoliert vorliegt und dieser erst bei Erreichen einer bestimmten Temperatur aktiviert wird. Dadurch wird unter anderem eine stärkere Vernetzung der Polyurethan-Dispersion ermöglicht. Als geblocktes NCO werden vorzugsweise aromatische Isocyanate (z.B. monomere Diphenylmethandiisocyanate) und/oder aliphatische Isocyanate (z.B. Isophorondiisocyanat) zugegeben.

In weiterer Ausgestaltung der Erfindung ist der faserhaltige Träger für die Kernschicht des Sandwichblechs als Gelege, Gewebe, Gewirke oder Vliesstoff ausgebildet. Durch die Struktur des faserhaltigen Trägers lassen sich die Biegesteifigkeit und das Umformvermögen des erfindungsgemäßen Sandwichblechs beeinflussen. Zur Erzielung einer besonders hohen Biegesteifigkeit wird der faserhaltige Träger vorzugsweise als Gewebe ausgebildet. Ein gutes bis sehr gutes Umformvermögen lässt sich dagegen besser mit einer als Vliesstoff ausgebildeten Faserlage erreichen.

Die Dicke der Kernschicht des erfindungsgemäßen Sandwichblechs liegt vorzugsweise im Bereich von 0,4 mm bis 2,0 mm, und beträgt besonders bevorzugt maximal 1,5 mm.

Als Deckbleche für das erfindungsgemäße Sandwichblech eignen sich Bleche aus Aluminium-, Magnesium- oder Stahlwerkstoff und deren Kombinationen. Besonders bevorzugt werden Deckbleche aus Stahlwerkstoff verwendet, die eine Dicke im Bereich von 0,1 mm bis 1,0 mm, vorzugsweise im Bereich von 0,2 mm bis 0,8 mm aufweisen. Stahlwerkstoff ist ein relativ kostengünstiger Werkstoff, der sich durch eine hohe Temperaturbeständigkeit, eine hohe Bruchfestigkeit und eine gute Umformbarkeit, insbesondere ein günstiges Tiefziehverhalten und/oder Prägeverhalten auszeichnet. Die typischen Streckgrenzen für die hier verwendeten Stahl-Deckbleche liegen im Bereich von 250 und 350 MPa. Andere Steifigkeiten mit höheren Streckgrenzen sind ebenfalls verwendbar.

Um günstige Materialkosten und zugleich eine hohe Lebensdauer des erfindungsgemäßen Bauelements zu erzielen, sieht eine weitere Ausgestaltung der Erfindung vor, dass die Deckbleche mit einer Korrosionsschutzschicht versehen sind. Die Korrosionsschutzschicht wird beispielsweise durch Feuerveredelung und/oder elektrolytische Beschichtung der metallischen Deckbleche realisiert. Charakteristische Überzüge für die Feuerveredelung sind: Z: 99% Zn, ZA: 95% Zn + 5% Al;
AZ: 5% Al + 43,4% Zn + 1,6% Si; AS: 88-92% Al + 8-12% Si.

Eine weitere vorteilhafte Ausgestaltung des erfindungsgemäßen Sandwichblechs ist dadurch gekennzeichnet, dass die Deckbleche unterschiedlich dick und/oder mit unterschiedlichen Korrosionsschutzschichten versehen sind. Hierdurch lässt sich ein hinsichtlich hoher Biegesteifigkeit, geringem Bauteilgewicht und hoher Korrosionsbeständigkeit optimales Sandwichblech erzielen.

In einer weiteren Ausgestaltung des erfindungsgemäßen Sandwichblechs ist mindestens eines der Deckbleche mit einer aus Zink gebildeten Korrosionsschutzschicht versehen. Alternativ oder zusätzlich kann auch mindestens eines der Deckbleche mit einer aus Aluminium gebildeten Korrosionsschutzschicht versehen sein.

Neben der klassischen Feuerbeschichtung sowie der elektrolytischen Beschichtung können ebenfalls CVD-, PVD- und/oder Sol-Gel-Beschichtungen verwendet werden. Ferner können die Deckbleche auch weiterveredelt werden bzw. sein, beispielsweise mittels Anodisieren. Der Farbgestaltung sind dadurch keine Grenzen gesetzt.

Gemäß einer weiteren Ausgestaltung des erfindungsgemäßen Sandwichblechs ist mindestens eines der Deckbleche mit einer organischen Schicht, beispielsweise in Form von Lack oder einer lackierten Folie bzw. Lackfolie versehen. Dadurch sind der Farbgestaltung des erfindungsgemäßen Sandwichblechs keine Grenzen gesetzt. Vorzugsweise hat die organische Schicht eine selbstleuchtende Eigenschaft (selbstleuchtenden Charakter).

Eine vorteilhafte Ausgestaltung des erfindungsgemäßen Verfahrens ist dadurch gekennzeichnet, dass die Kernschicht vor dem Verbinden mit den Deckblechen penetriert und/oder mechanisch entwässert wird. Hierdurch wird der Wassergehalt des faserhaltigen Trägers nachdem er mit der wässrigen, lösungsmittelfreien Polyurethan-Dispersion getränkt wurde, effektiv reduziert. Eine innere Korrosion an den metallischen Deckblechen kann somit zuverlässig verhindert werden. Die Reduzierung des Wassergehalts kann beispielsweise beim Aufbau der Kernschicht aus mehreren faserhaltigen Trägern (Faserlagen) durch schichtweises Applizieren der wässrigen, lösungsmittelfreien PU-Dispersion, vorzugsweise unter Zugabe von geblocktem NCO, erfolgen, wobei die PU-Dispersion beispielsweise mittels mindestens einer Nadelwalze, Gummimantelwalze oder dergleichen in die jeweilige Faserlage eingepresst und/oder überschüssiges Wasser herausgepresst werden. Bei Verwendung von nur einer Faserlage kann dagegen die Reduzierung des Wassergehaltes beispielsweise durch eine Erhöhung der Porosität der Faserlage erreicht werden.

Eine weitere bevorzugte Ausgestaltung des erfindungsgemäßen Verfahrens sieht vor, dass das aus den Deckblechen und der Kernschicht hergestellte Sandwichblech unmittelbar im Anschluss an das stoffschlüssige Verbinden von Kernschicht und Deckblechen gekühlt und während der Kühlung zugleich gepresst oder gewalzt wird. Hierdurch kann die mit dem Wasseraustrag einhergehende Volumenschrumpfung bzw. Verdichtung der Kernschicht unterstützt werden. Insbesondere können dadurch gezielt Spannungen in dem Verbund (Sandwichblech) reduziert werden.

Nachfolgend wird die Erfindung anhand einer mehrere Ausführungsbeispiele darstellenden Zeichnung erläutert. Es zeigen schematisch:
- Fig. 1: einen Abschnitt eines erfindungsgemäßen Sandwichblechs in einer Schnittansicht; und
- Fig. 2: eine Anlage zur Herstellung eines erfindungsgemäßen Sandwichblechs.

Das in der Zeichnung dargestellte Sandwichblech 1 ist aus zwei metallischen Decklagen 1.1, 1.2 und einer faserhaltigen, hitzebeständigen Kernschicht 1.3 aufgebaut.

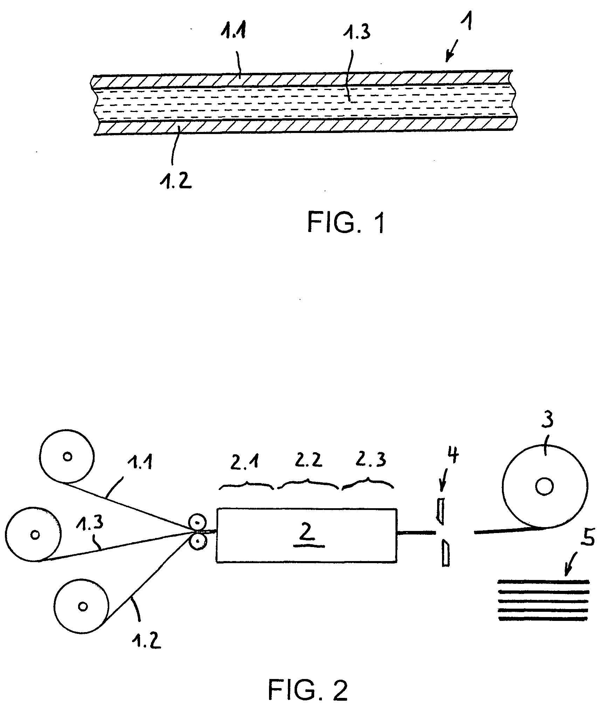

Die Decklagen 1.1, 1.2 bestehen vorzugsweise aus Stahlblech, das mit einer Korrosionsschutzschicht versehen ist. Bevorzugt werden dabei auf Zink oder Aluminium basierende Korrosionsschutzschichten verwendet. Die Dicke der jeweiligen Decklage (Deckblech) 1.1, 1.2 beträgt beispielsweise ca. 0,1 bis 0,8 mm, vorzugsweise maximal 0,5 mm, besonders bevorzugt maximal 0,4 mm. In dem in Fig. 1 gezeigten Ausführungsbeispiel haben beide Deckbleche 1.1,1.2 im Wesentlichen die gleiche Dicke, z.B. ca. 0,3 mm, und besitzen die gleiche Werkstoffgüte. Es können aber auch Deckbleche 1.1, 1.2 unterschiedlicher Dicke und/oder Werkstoffgüte zur Herstellung des Materialverbundes 1 verwendet werden. Insbesondere können die Deckbleche 1.1, 1.2 mit unterschiedlichen Korrosionsschutzschichten versehen sein. So kann beispielsweise das Deckblech 1.1 oder 1.2 mit einer aluminiumbasierten Beschichtung versehen sein, die ein hohes Wärmereflexionsvermögen besitzt, während das andere Deckblech 1.2 oder 1.1 mit einer zinkbasierten Beschichtung versehen ist.

Die Kernschicht 1.3 ist aus mindestens einer Faserlage bzw. einem faserhaltigen Träger und einer die Fasern umgebenden Polyurethan-Matrix gebildet. Die Matrix wird durch Tränkung bzw. Infiltration/Imprägnierung des oder der faserhaltigen Träger mit einer wässrigen, lösungsmittelfreien Polyurethan-Dispersion erzeugt. Unter dem Begriff "Prepreg" werden im vorliegenden Zusammenhang vorimprägnierte Fasern verstanden, wobei die Fasern in der Polyurethan-Matrix als Endlosfasern sowie als kürzere Faserstücke, beispielsweise mit einer Faserlänge von maximal 50 mm, vorliegen können. Die PU-Dispersion bzw. die PU-Matrix wirkt als Bindemittel (Klebstoff).

Vorzugsweise enthält die Polyurethan-Dispersion zusätzlich ein geblocktes NCO (Isocyanat), das bei Raumtemperatur passiv ist und erst bei Erwärmen auf eine bestimmte Temperatur, beispielsweise ab 50° C, aktiviert wird. Für ein solches Blockierungsmittel eignen sich aromatische und aliphatische Isocyanate, z.B. monomere Diphenylmethandiisocyanate und Isophorondiisocyanat. Durch den Einsatz eines entsprechenden Blockierungsmittels lässt sich eine höhere Vernetzung der Polyurethan-Dispersion erzielen. Das Mischungsverhältnis von PU-Dispersion und geblocktem NCO hängt von der Aktivierungstemperatur sowie vom gewünschten Vernetzungsgrad innerhalb des faserhaltigen Trägers ab.

Die Fasern des Trägers sind aus mineralischen, hochtemperaturstabilen Fasern, aus keramischen, nicht-brennbaren Fasern zusammengesetzt. Der faserhaltige Träger kann dabei als Gelege, Gewebe oder Vliesstoff ausgebildet sein. Der für die Herstellung der Kernschicht 1.3 verwendete faserhaltige Träger ist porös im Sinne von offenporig, also flüssigkeitsdurchlässig.

Für die Herstellung des erfindungsgemäßen Sandwichbleches 1 wird die Kernschicht 1.3 als vorkonfektioniertes Halbzeug, beispielsweise in Form eines sogenannten Prepregs verwendet. Unter dem Begriff "Prepreg" werden im vorliegenden Zusammenhang vorimprägnierte Fasern verstanden, wobei die Fasern in der Polyurethan-Matrix sowohl als Endlosfasern als auch als kürzere Faserstücke, beispielsweise mit einer Faserlänge von maximal 50 mm, vorliegen können.

Die Kernschicht 1.3 des erfindungsgemäßen Sandwichbleches 1 weist eine Dicke im Bereich von 0,4 mm bis 2,0 mm, vorzugsweise maximal 1,5 mm auf. Sie besitzt eine Temperaturbeständigkeit von mindestens 300°C, vorzugsweise mindestens 700°C. Außerdem kann die Kernschicht 1.3 ein mineralisches, halogenfreies Brandschutzmittel enthalten, welches eine hohe Rauchgasunterdrückungswirkung aufweist.

Die faserhaltige Kernschicht 1.3 verleiht dem erfindungsgemäßen Sandwichblech 1 neben der hohen Temperaturbeständigkeit bei zugleich guter Wärmeisolierung auch deutlich höhere Steifigkeitseigenschaften im Vergleich zu einer konventionellen Kernschicht aus thermoplastischem Kunststoff. Diese höheren Steifigkeitseigenschaften ermöglichen die Verwendung relativ dünner metallischer Decklagen 1.1, 1.2 und somit eine Reduzierung des Gewichts des Sandwichbleches 1.

In Fig. 1 ist zu erkennen, dass jedes der Deckbleche 1.1, 1.2 des Materialverbundes 1 deutlich dünner ausgebildet ist als die Kernschicht 1.3. Zur Erzielung eines leichtgewichtigen Sandwichblechs beträgt die Dicke der Kernschicht 1.3 mindestens das 1,5-fache, vorzugsweise mindestens das 2-fache, und besonders bevorzugt mindestens das 2,5-fache der Dicke des dünnsten der beiden Deckbleche 1.1, 1.2.

In Fig. 2 ist schematisch ein Verfahren zur Herstellung eines erfindungsgemäßen Sandwichwerkstoffes 1 dargestellt. Vorzugsweise werden die Deckbleche 1.1, 1.2 und die vorkonfektionierte Kernschicht 1.3 als Wickel (Coil) bereitgestellt und abgehaspelt. Alternativ können die Komponenten 1.1,1.2 und 1.3 auch als Zuschnitte (Tafeln) bereitgestellt und miteinander verbunden werden.

Die Deckbleche 1.1, 1.2 und die vorkonfektionierte Kernschicht 1.3 werden einer beheizten Presse 2, vorzugsweise einer Doppelbandpresse zugeführt. In der Presse 2 wird der Verbund auf ca. 120°C bis 180°C, vorzugsweise maximal 160°C erwärmt. Der von der Presse, insbesondere Doppelbandpresse 2 erzeugte Druck kann im Wesentlichen konstant sein. Der aufgebrachte Druck kann beispielsweise bis zu max. 30 bar betragen. Vorteilhaft kann die Presse 2 aber auch mit unterschiedlich hohen Pressdrücken arbeiten. So kann beispielsweise in einer Doppelbandpresse 2, die in eine Erwärmungszone 2.1, eine Haltezone 2.2 und eine Abkühlzone 2.3 gegliedert ist, der Pressdruck in der Haltezone 2.2 deutlich höher sein, als in der nachfolgenden Abkühlzone (Kühlstufe).

Wie oben bereits erwähnt, wirkt die PU-Matrix als Bindemittel (Klebstoff), insbesondere wenn der wässrigen, lösungsmittelfreien PU-Dispersion, mit welcher die Faserlage bzw. Faserlagen getränkt/imprägniert wurden, geblocktes NCO (Isocyanat) zugegeben wurde. Durch die Erwärmung des aus den Deckblechen 1.1, 1.2 und der vorkonfektionierten Kernschicht 1.3 aufgebauten Materialverbundes wird die Klebefunktion der PU-Matrix aktiviert und/oder reaktiviert. Die erfindungsgemäß vorkonfektionierte Kernschicht 1.3 erfordert für die stoffschlüssige Verbindung mit den Deckblechen 1.1, 1.2 keine zusätzlich Haftvermittlerschicht, insbesondere keine organische Haftvermittlerschicht.

In der Kühlzone 2.3, in der der Materialverbund vorzugsweise bis auf Raumtemperatur abgekühlt wird, herrscht vorteilhaft ein moderater Pressdruck, durch den infolge des Wasseraustrags aus der PU-Matrix eine Verdichtung (Volumenschrumpfung) der Kernschicht unterstützt werden kann bzw. wird. Auf diese Weise werden in dem Materialverbund üblicherweise vorhandene Spannungen gezielt abgebaut.

Hinter der Doppelbandpresse 2 wird das hergestellte Sandwichblech 1 zu einem Coil 3 aufgewickelt oder mittels einer Schneidvorrichtung 4 in einzelne Tafeln 5 abgelängt.

Das erfindungsgemäße Sandwichblech 1 lässt sich gut plastisch umformen, insbesondere durch Tiefziehen und/oder Prägen. Hierzu werden beispielsweise von einem entsprechenden bandförmigen Verbundmaterial 1 Platinen abgeschnitten und in einer Formpresse (nicht gezeigt) zu dreidimensionalen Bauteilen, z.B. Karosserieteilen kalt umgeformt. Die Bauteile, insbesondere Karosserieteile, können dabei aufgrund der kurzen Faserlänge in der Polyurethan-Matrix in nahezu beliebigen Formen bzw. Profilen und in unterschiedlichen Abmessungen hergestellt werden.

Das erfindungsgemäße Sandwichblech 1 kann vorteilhaft auch beispielsweise im Schiffsbau, Flugzeugbau, Schienenfahrzeugbau, Anlagenbau sowie im Möbelbau angewendet werden.

Die Ausführung der Erfindung ist nicht auf die in der Zeichnung dargestellten Ausführungsbeispiele beschränkt. Vielmehr sind zahlreiche Varianten des erfindungsgemäßen Sandwichblechs bzw. des Verfahrens zu seiner Herstellung denkbar, die auch bei Ausgestaltungen, die von den dargestellten Ausführungsbeispielen abweichen, von der in den beiliegenden Ansprüchen angegebenen Erfindung Gebrauch machen. So können die Deckbleche 1.1,1.2 beispielsweise auch Aluminium- und/oder Magnesiumwerkstoff bestehen.

## Patentansprüche

1. Sandwichblech, insbesondere zur Herstellung von Bauelementen oder Karosserieteilen, mit metallischen Deckblechen (1.1, 1.2) und mindestens einer zwischen den Deckblechen angeordneten Kernschicht (1.3) aus Polymer, die stoffschlüssig mit den Deckblechen (1.1, 1.2) verbunden ist, **dadurch gekennzeichnet, dass** die Kernschicht (1.3) einen faserhaltigen Träger und eine die Fasern des Trägers umgebende Polyuretha-n-Matrix aufweist, wobei die Polyurethan-Matrix aus einer wässrigen, lösungsmittelfreien Polyurethan-Dispersion gebildet ist, wobei die Fasern als kürzere Faserstücke mit einer Faserlänge von maximal 50 mm in der Polyurethan-Matrix vorliegen, wobei die Fasern des Trägers aus nicht brennbaren, keramischen Fasern zusammengesetzt sind.

2. Sandwichblech nach Anspruch 1, **dadurch gekennzeichnet, dass** die Polyurethan-Dispersion geblocktes Isocyanat enthält.

3. Sandwichblech nach Anspruch 1 oder 2, **dadurch gekennzeichnet, dass** der faserhaltige Träger als Gelege, Gewebe oder Vliesstoff ausgebildet ist.

4. Sandwichblech nach einem der Ansprüche 1 bis 3, **dadurch gekennzeichnet, dass** die Kernschicht (1.3) eine Dicke im Bereich von 0,4 mm bis 2,0 mm, vorzugsweise maximal 1,5 mm aufweist.

5. Sandwichblech nach einem der Ansprüche 1 bis 4, **dadurch gekennzeichnet, dass** die Deckbleche (1.1, 1.2) aus Aluminium-, Magnesium-, Stahlwerkstoff oder deren Kombinationen hergestellt sind.

6. Sandwichblech nach einem der Ansprüche 1 bis 5, **dadurch gekennzeichnet, dass** das jeweilige Deckblech (1.1, 1.2) eine Dicke im Bereich von 0,1 mm bis 1,0 mm, vorzugsweise im Bereich von 0,2 mm bis 0,8 mm aufweist.

7. Sandwichblech nach einem der Ansprüche 1 bis 6, **dadurch gekennzeichnet, dass** mindestens eines der Deckbleche (1.1, 1.2) mit einer Korrosionsschutzschicht versehen ist

8. Verfahren zur Herstellung eines Sandwichblechs, insbesondere zur Verwendung im Bauwesen oder Karosseriebau, bei dem metallische Deckbleche (1.1, 1.2) mit einer dazwischen angeordneten Kernschicht (1.3) aus Polymer unter Anwendung von Druck und Wärme stoffschlüssig verbunden werden, **dadurch gekennzeichnet, dass** als Kernschicht eine vorkonfektionierte Kernschicht (1.3) verwendet wird, die einen faserhaltigen Träger und eine die Fasern des Trägers umgebende Polyurethan-Matrix aufweist, wobei die Polyurethan-Matrix aus einer wässrigen, lösungsmittelfreien Polyurethan-Dispersion gebildet wird, wobei die Fasern als kürzere Faserstücke mit einer Faserlänge von maximal 50 mm in der Polyurethan-Matrix vorliegen, wobei als faserhaltiger Träger ein aus nicht brennbaren, keramischen Fasern hergestellter Träger verwendet wird.

9. Verfahren nach Anspruch 8, **dadurch gekennzeichnet, dass** der Polyurethan-Dispersion geblocktes Isocyanat zugegeben wird.

10. Verfahren nach Anspruch 8 oder 9, **dadurch gekennzeichnet, dass** als geblocktes Isocyanat aromatische und/oder aliphatische Isocyanate zugegeben werden.

11. Verfahren nach einem der Ansprüche 8 bis 10, **dadurch gekennzeichnet, dass** die Kernschicht (1.3) vor dem Verbinden mit den Deckblechen (1.1, 1.2) penetriert und/oder mechanisch entwässert wird.

12. Verfahren nach einem der Ansprüche 8 bis 11, **dadurch gekennzeichnet, dass** als Deckbleche (1.1, 1.2) solche aus Aluminium-, Magnesium-, Stahlwerkstoff oder deren Kombinationen verwendet werden.

13. Verfahren nach einem der Ansprüche 8 bis 12, **dadurch gekennzeichnet, dass** als Deckbleche (1.1, 1.2) solche aus Stahlwerkstoff verwendet werden, die mit einer Korrosionsschutzschicht, vorzugsweise einer Zinkschicht versehen sind.

14. Verfahren nach einem der Ansprüche 8 bis 13, **dadurch gekennzeichnet, dass** das aus den Deckblechen (1.1, 1.2) und der Kernschicht (1.3) hergestellte Sandwichblech (1) unmittelbar im Anschluss an das stoffschlüssige Verbinden von Kernschicht und Deckblechen gekühlt und während der Kühlung zugleich gepresst oder gewalzt wird.

## Claims

1. Sandwich sheet, in particular for the production of construction elements or of vehicle body parts, with metallic cover sheets (1.1, 1.2) and with, arranged between the cover sheets, at least one core layer (1.3) made of polymer and is integrally joined to the cover sheets (1.1, 1.2), **characterized in that** the core layer (1.3) comprises a fibre-containing carrier and, surrounding the fibres of the carrier, a polyurethane matrix, in which the polyurethane matrix has been formed from an aqueous, solvent-free polyurethane dispersion, in which the fibres have the form of relatively short fibre pieces with a total fibre length of maximum 50 mm in the polyurethane matrix, wherein the fibres of the carrier are composed of non-combustible, ceramic fibres.

2. Sandwich sheet according to Claim 1, **characterized in that** the polyurethane dispersion comprises blocked isocyanate.

3. Sandwich sheet according to Claim 1 or 2, **characterized in that** the fibre-containing carrier has the form of laid scrim, woven fabric or nonwoven fabric.

4. Sandwich sheet according to any of Claims 1 to 3, **characterized in that** the thickness of the core layer (1.3) is in the range from 0.4 mm to 2.0 mm, preferably at most 1.5 mm.

5. Sandwich sheet according to any of Claims 1 to 4, **characterized in that** the cover sheets (1.1, 1.2) have been produced from aluminum material, magnesium material, steel material or any combination of these.

6. Sandwich sheet according to any of Claims 1 to 5, **characterized in that** the thickness of each outer sheet (1.1, 1.2) is in the range from 0.1 mm to 1.0 mm, preferably in the range from 0.2 mm to 0.8 mm.

7. Sandwich sheet according to any of Claims 1 to 6, **characterized in that** at least one of the cover sheets (1.1, 1.2) has a corrosion-protection layer.

8. Process for the production of a sandwich sheet, in particular for use in the construction industry or vehicle bodywork construction, by integrally joining, with use of pressure and heat, of metallic cover sheets (1.1, 1.2) to a core layer (1.3) arranged therebetween made of polymer, **characterized in that** a prefabricated core layer (1.3) is used as core layer and comprises a fibre-containing carrier and, surrounding the fibres of the carrier, a polyurethane matrix, in which the polyurethane matrix has been formed from an aqueous, solvent-free polyurethane dispersion, in which the fibres have the form of relatively short fibre sections with a total fibre length of maximum 50 mm in the polyurethane matrix, wherein a carrier produced from non-combustible, ceramic fibres is used as fibre-containing carrier.

9. Process according to Claim 8, **characterized in that** blocked isocyanate is added to the polyurethane dispersion.

10. Process according to Claim 8 or 9, **characterized in that** aromatic and/or aliphatic isocyanates are added as blocked isocyanate.

11. Process according to any of Claims 8 to 10, **characterized in that** before the core layer (1.3) is joined to the cover sheets (1.1, 1.2) it is penetrated and/or mechanically dewatered.

12. Process according to any of Claims 8 to 11, **characterized in that** cover sheets (1.1, 1.2) made of aluminum material, magnesium material, steel material or any combination of these are used.

13. Process according to any of Claims 8 to 12, **characterized in that** cover sheets (1.1, 1.2) made of steel material are used which have a corrosion-protection layer, preferably a zinc layer.

14. Process according to any of Claims 8 to 13, **characterized in that** the sandwich sheet (1) produced from the cover sheets (1.1, 1.2) and from the core layer (1.3) is cooled immediately after the integrally joining of core layer and cover sheets, and during the cooling is simultaneously pressed or rolled.

## Revendications

1. Tôle en sandwich, notamment pour la fabrication d'éléments de construction ou de parties de carrosserie, comprenant des tôles de recouvrement métalliques (1.1, 1.2) et au moins une couche noyau (1.3) en polymère agencée entre les tôles de recouvrement, qui est reliée avec les tôles de recouvrement (1.1, 1.2) par liaison de matière, **caractérisée en ce que** la couche noyau (1.3) comprend un support contenant des fibres et une matrice de polyuréthane entourant les fibres du support, la matrice de polyuréthane étant formée par une dispersion aqueuse de polyuréthane sans solvant, les fibres se présentant dans la matrice de polyuréthane sous la forme de morceaux de fibres courts d'une longueur de fibre au maximum 50 mm, les fibres du support étant composées de fibres céramiques non combustibles.

2. Tôle en sandwich selon la revendication 1, **caractérisée en ce que** la dispersion de polyuréthane contient un isocyanate bloqué.

3. Tôle en sandwich selon la revendication 1 ou 2, **caractérisée en ce que** le support contenant des fibres est configuré sous la forme d'une natte, d'un tissu ou d'un non-tissé.

4. Tôle en sandwich selon l'une quelconque des revendications 1 à 3, **caractérisée en ce que** la couche de noyau (1.3) présente une épaisseur dans la plage allant de 0,4 mm à 2,0 mm, de préférence au maximum 1,5 mm.

5. Tôle en sandwich selon l'une quelconque des revendications 1 à 4, **caractérisée en ce que** les tôles de recouvrement (1.1, 1.2) sont fabriquées en un matériau en aluminium, magnésium, acier ou leurs combinaisons.

6. Tôle en sandwich selon l'une quelconque des revendications 1 à 5, **caractérisée en ce que** chaque tôle de recouvrement (1.1, 1.2) présente une épaisseur dans la section allant de 0,1 mm à 1,0 mm, de préférence dans la section allant de 0,2 mm à 0,8 mm.

7. Tôle en sandwich selon l'une quelconque des revendications 1 à 6, **caractérisée en ce qu'**au moins une des tôles de recouvrement (1.1, 1.2) est munie d'une couche anticorrosion.

8. Procédé de fabrication d'une tôle en sandwich, notamment destinée à une utilisation dans le bâtiment ou la construction de carrosseries, selon lequel des tôles de recouvrement métalliques (1.1, 1.2) sont reliées par liaison de matière avec une couche noyau (1.3) en polymère agencée entre elles en utilisant de la pression et de la chaleur, **caractérisé en ce qu'**une couche noyau (1.3) préfabriquée est utilisée en tant que couche noyau, qui comprend un support contenant des fibres et une matrice de polyuréthane entourant les fibres du support, la matrice de polyuréthane étant formée par une dispersion aqueuse de polyuréthane sans solvant, les fibres se présentant dans la matrice de polyuréthane sous la forme de morceaux de fibres courts d'une longueur de fibre au maximum 50 mm, un support fabriqués en fibres céramiques non combustibles étant utilisé en tant que support contenant des fibres.

9. Procédé selon la revendication 8, **caractérisé en ce qu'**un isocyanate bloqué est ajouté à la dispersion de polyuréthane.

10. Procédé selon la revendication 8 ou 9, **caractérisé en ce que** des isocyanates aromatiques et/ou aliphatiques sont ajoutés en tant qu'isocyanate bloqué.

11. Procédé selon l'une quelconque des revendications 8 à 10, **caractérisé en ce que** la couche noyau (1.3) est pénétrée et/ou mécaniquement déshydratée avant la liaison avec les tôles de recouvrement (1.1, 1.2).

12. Procédé selon l'une quelconque des revendications 8 à 11, **caractérisé en ce que** des tôles de recouvrement en un matériau en aluminium, magnésium, acier ou leurs combinaisons sont utilisées en tant que tôles de recouvrement (1.1, 1.2).

13. Procédé selon l'une quelconque des revendications 8 à 12, **caractérisé en ce que** des tôles de recouvrement en un matériau en acier qui sont munies d'une couche anticorrosion, de préférence d'une couche de zinc, sont utilisées en tant que tôles de recouvrement (1.1, 1.2).

14. Procédé selon l'une quelconque des revendications 8 à 13, **caractérisé en ce que** la tôle en sandwich (1) fabriquée à partir des tôles de recouvrement (1.1, 1.2) et de la couche noyau (1.3) est refroidie immédiatement après la liaison par liaison de matière de la couche noyau et des tôles de recouvrement, et comprimée ou cylindrée simultanément pendant le refroidissement.
